Europäisches Patentamt

European Patent Office    (11) Publication number:    **0 318 185**
Office européen des brevets                                    **A1**

## (12) EUROPEAN PATENT APPLICATION

(21) Application number: 88310598.3

(22) Date of filing: 10.11.88

(51) Int. Cl.⁴: **C10G 11/18 , B01J 8/24**

(30) Priority: 23.11.87 US 123834

(43) Date of publication of application:
31.05.89 Bulletin 89/22

(84) Designated Contracting States:
DE GB

(71) Applicant: **Conoco Inc.**
**1000 South Pine Street**
**Ponca City Oklahoma 74603(US)**

(72) Inventor: **Carter, William O.**
**1520 Covey Ln**
**Lake Charles LA 70605(US)**

(74) Representative: **Davies, Christopher Robert et**
**al**
**Frank B. Dehn & Co. Imperial House 15-19**
**Kingsway**
**London WC2B 6UZ(GB)**

(54) FCC feed nozzle design.

㊾ A feed nozzle (12) for introducing hydrocarbon feed into the riser section of a fluid catalytic cracking unit. The nozzle includes an inline steam ring atomizer (24) and an enlarged section (32) downstream from the atomizer.

FIG. 2

## FCC FEED NOZZLE DESIGN

This invention relates to fluid catalytic crackers for cracking hydrocarbon feed into gasoline and other products, and more particularly to improved nozzles for introducing atomized feed into the riser section of a fluid catalytic cracker (FCC).

By way of background, the hydrocarbon conversion catalyst usually employed in an FCC installation is preferably a high activity crystalline zeolite catalyst of a fluidizable particle size. The catalyst is combined with hydrocarbon feed (oil) and steam and is transferred in suspended or dispersed phase condition generally upwardly through a conversion zone (FCC riser), providing a hydrocarbon residence time in the conversion zone in the range of 0.5 to about 10 seconds, and usually less than about 8 seconds. High temperature riser conversions, occurring at temperatures of at least 535°C. or higher and at 0.5 to 4 seconds hydrocarbon residence time in contact with the catalyst in the FCC riser, are desirable for some operations before initiating separation of vaporous hydrocarbon product materials from the catalyst. During the hydrocarbon conversion step, carbonaceous deposits accumulate on the catalyst particles and the particles entrain hydrocarbon vapors upon removal from the hydrocarbon conversion step. The entrained hydrocarbons are subjected to further contact with the catalyst until they are removed from the catalyst by mechanical means and/or stripping gas in a separate catalyst stripping zone. Hydrocarbon conversion products separated from the catalyst and stripped materials are combined and passed to a product fractionation step. Stripped catalyst containing deactivating amounts of carbonaceous material is then passed to a catalyst regeneration operation.

Of particular interest has been the development of methods and systems for feeding oil, steam and catalyst into an FCC riser and improving the contact between the oil and catalyst to obtain uniform mixing as they travel up the FCC riser.

Numerous nozzle types are utilized for injecting feed into FCC units.

U.S. Patent 3,152,065 to Sharp et al. discloses a feed nozzle for an FCC which utilizes steam to disperse and heat the feed.

U.S. Patent 4,434,049 to Dean et al. discloses an FCC feed nozzle which atomizes the feed through a restricted opening.

U.S. Patent 4,650,566 is relevant in disclosing a nozzle system for blending oil and steam into the lower part of an FCC riser

Numerous other FCC feed nozzle designs are known in the art, as indicated by the recitation of prior art in the Dean et al. and Buyan et al. patents. Many of these prior art nozzles atomise oil through an orifice attached to the nozzle tip, with varying degrees of success. However, none of the prior art nozzles provides all the advantages obtained by the nozzle of this invention.

Viewed from one aspect the invention provides a feed nozzle for injecting atomized oil into the riser section of a fluid catalytic cracker comprising:

(a) a liquid feed inlet section at one end thereof;

(b) steam inlet means for providing steam to said nozzle;

(c) steam discharge means for discharging steam into said liquid feed flowing through said nozzle;

(d) a first steam and feed conducting section downstream from said steam discharge means;

(f) a second steam and feed conducting section downstream from said first steam and feed conducting section, said second conducting section having a cross-sectional area larger than that of said first conducting section, said second conducting section extending to an opening in said riser section and being adapted to introduce atomized oil at an angle to the flow of material through said riser section.

According to the present invention, an FCC nozzle is provided which thoroughly atomizes FCC feed into a riser without causing erosion of the inner riser wall. This is accomplished by injection of high velocity steam into the feed flowing through the nozzle, followed by directing the steam and the resulting atomized oil feed through an enlarged diameter section to reduce the velocity of the feed before it enters the riser.

An embodiment of the invention will now be described, by way of example only, with reference to the drawings, wherein:

Figure 1 is an elevational view, partially in cross-section, showing feed nozzles in accordance with the invention.

Figure 2 is a cross-sectional view of a portion of a nozzle in accordance with the invention.

The preferred embodiment of the invention will be described having reference to the drawings.

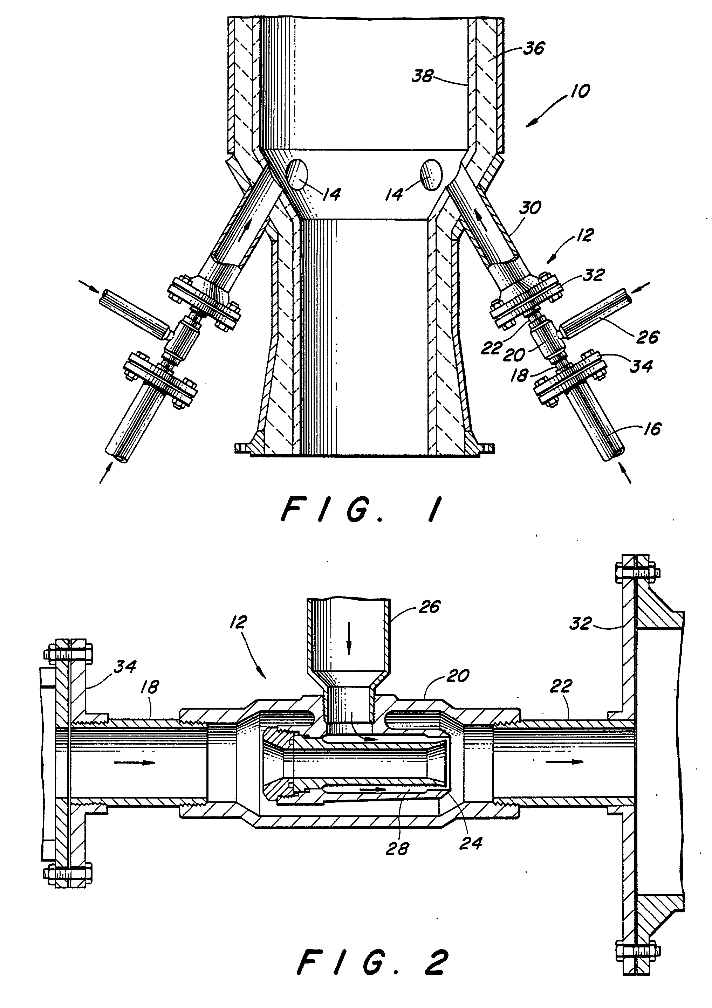

Figure 1 shows a section of an FCC riser 10 with nozzles 12 extending to openings 14 spaced about the circumference of riser 10. Each nozzle 12 receives hydrocarbon feed from feed line 16 which, as seen more clearly in Figure 2, connects to feed inlet section 18 of nozzle 12. A slightly enlarged center section 20 connects inlet section 18 to outlet section 22, and contains a ring orifice means 24 for discharging steam from steam line 26 and annular space 28 through ring orifice 24 parallel to the flow of hydrocarbon feed through nozzle 12.

Referring again to Figure 1, outlet section 22 of nozzle 12 is connected to enlarged outlet section 30 which extends to an opening 14 in riser 10. The cross-sectional area of enlarged outlet section 30 is preferably at least four times as great as that of outlet section 22.

The nozzles 12 do not extend into the flow path in the riser 10, so erosion of the nozzle is not a problem. Many prior art designs utilize nozzle tips that extend into the riser, and erosion problems are common with that arrangement. As shown in Figure 1, enlarged outlet section 30 terminates flush with the inner metal wall of riser 10, and matching openings 14 extend through refractory layers 36 and 38. Openings 14 can be cut or otherwise formed in the refractory, or outlet sections 30 could be extended to the interior of the refractory. It is generally preferable to terminate outlet section 30 as shown to protect the metal from the high temperature in the riser.

Nozzles 12 preferably incorporate bolted flange coupling means 32 and 34 which enable convenient periodic inspection and repair.

Preferably, a plurality of nozzles are uniformly distributed about riser 10 in a known manner.

Operation of the Preferred Embodiment

In the operation of the preferred embodiment as described above, hydrocarbon feed from line 16 passes through inlet section 18 at a relatively low velocity, such as about 3 meters per second. Steam from line 26 exits orifice 24 at a much higher velocity, such as about 500 meters per second. This high velocity steam impinges on the oil and supplies energy for feed atomization. Movement of atomized feed and steam into enlarged outlet section 30 results in a substantial decrease in velocity and reduces or eliminates the potential for erosion of the interior surface of riser 10. As shown in Figure 1, the feed and steam from nozzles 12 enter riser 10 at an angle to the riser, the nozzle preferably forming an angle of about 30° to the longitudinal axis of the riser.

The foregoing description of the preferred embodiment of the invention and its operation is intended to be illustrative of the invention rather than limiting. Modifications and variations encompassed by the appended claims are intended to be within the scope of the invention.

**Claims**

1. A feed nozzle for injecting atomized oil into the riser section of a fluid catalytic cracker comprising:

(a) a liquid feed inlet section at one end thereof;

(b) steam inlet means for providing steam to said nozzle;

(c) steam discharge means for discharging steam into said liquid feed flowing through said nozzle;

(d) a first steam and feed conducting section downstream from said steam discharge means;

(e) a second steam and feed conducting section downstream from said first steam and feed conducting section, said second conducting section having a cross-sectional area larger than that of said first conducting section, said second conducting section extending to an opening in said riser section and being adapted to introduce atomized oil at an angle to the flow of material through said riser section.

2. A feed nozzle in accordance with Claim 1 wherein said second conducting section has a cross-sectional area at least four times the cross-sectional area of said first conducting section.

3. A feed nozzle in accordance with Claim 1 or 2 wherein said steam discharge means comprises a ring orifice disposed in the liquid feed flow path in said nozzle and adapted to discharge steam parallel to the direction of flow of feed through said nozzle.

4. A feed nozzle in accordance with any preceding claim wherein said first and second steam and feed conducting sections are connected by bolted flange means.

*F I G.  I*

*F I G.  2*

| | European Patent Office | EUROPEAN SEARCH REPORT | Application Number |
|---|---|---|---|

EP 88 31 0598

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 563 334 (HAYS et al.)<br>* Figure 2; claims * | 1-4 | C 10 G 11/18<br>B 01 J 8/24 |
| D,A | US-A-4 434 049 (DEAN et al.)<br>* Figure 2 * | 1-4 | |
| D,A | US-A-4 650 566 (BUYAN et al.)<br>* Figures * | 1-4 | |
| D,A | US-A-3 152 065 (SHARP et al.)<br>* Figures 2,3 * | 1-4 | |

TECHNICAL FIELDS
SEARCHED (Int. Cl.4)

C 10 G
B 01 J

The present search report has been drawn up for all claims

| Place of search | Date of completion of the search | Examiner |
|---|---|---|
| THE HAGUE | 14-02-1989 | MICHIELS P. |